Europäisches Patentamt

European Patent Office

Office européen des brevets

(11) Veröffentlichungsnummer: **0 482 222 A1**

## (12) EUROPÄISCHE PATENTANMELDUNG

(21) Anmeldenummer: **90120138.4**

(22) Anmeldetag: **20.10.90**

(51) Int. Cl.5: **H01M 8/12**, H01M 8/06, C01B 31/20, C01B 21/02

(43) Veröffentlichungstag der Anmeldung:
**29.04.92 Patentblatt 92/18**

(84) Benannte Vertragsstaaten:
**AT BE CH DE DK ES FR GB GR IT LI LU NL SE**

(71) Anmelder: **ASEA BROWN BOVERI AG**

**CH-5401 Baden(CH)**

(72) Erfinder: **Andersson, Bengt**
**Felsenstrasse 1**
**CH-5400 Baden(CH)**

(54) Verfahren zur Trennung von Stickstoff und Kohlenstoffdioxyd und Konzentration des letzteren in energieliefernden Oxydations- und Verbrennungsprozessen.

(57) Verfahren zur Trennung von $N_2$ und $CO_2$ und Konzentration von $CO_2$ in Oxydations- und Verbrennungsprozessen, wobei kohlenstoffhaltige Brennstoffe ($CH_4$) mit Luft ($O_2$ + $4N_2$) in keramischen Hochtemperatur-Brennstoffzellen [2] zu $CO_2$ und $H_2O$ oxidiert werden und der Ballaststickstoff ($4N_2$) separat abgezogen wird. Aus dem Strom des $CO_2$ und $H_2O$ wird das $CO_2$ abgezweigt [5] und weiter konzentriert [6].

FIG.5

## TECHNISCHES GEBIET

Verringerung der bei Oxdationsprozessen (Verbrennungsverfahren aller Art) auftretenden $CO_2$-Emissionen in die Atmosphäre: Bekämpfung des Treibhauseffekts. Mit Kohlenwasserstoffen betriebene keramische Hochtemperatur-Brennstoffzellen.

Die Erfindung bezieht sich auf die bei konventioneller Verbrennung durch unkontrollierten $CO_2$-Ausstoss verursachte Problematik. Die Beeinträchtigung der atmosphärischen Luft durch wachsenden $CO_2$-Gehalt muss in Zukunft in Schranken gehalten werden. Hierzu sollen nicht-konventionelle Oxydationsverfahren zur Energiegewinnung herangezogen werden.

Im engeren Sinne betrifft die Erfindung ein Verfahren zur Trennung von $N_2$ und $CO_2$ und Konzentration des letzteren in energieliefernden Oxydations- und Verbrennungsprozessen.

## STAND DER TECHNIK

Die ungünstige Veränderung der Erdatmosphäre durch die industrielle Tätigkeit des Menschen führt zu sehr einschneidenden Klimaveränderungen. Dabei stellt der durch Verbrennungsvorgänge kohlenstoffhaltiger Brennstoffe verursachte unkontrollierte zunehmende Ausstoss von $CO_2$ in die Atmosphäre eine stark wachsende Bedrohung dar. Die Wissenschaftler sprechen vom sogenannten "Treibhauseffekt", welcher eine deutliche Zunahme der mittleren Temperatur in den unteren Schichten der Erdatmosphäre erwarten lässt.

Zum Stand der Technik werden die nachfolgenden Druckschriften genannt:
- O. Antonsen, W. Baukal und W. Fischer, "Hochtemperatur-Brennstoffbatterie mit keramischem Elektrolyten", Brown Boveri Mitteilungen Januar/Februar 1966, Seiten 21 - 30,
- US-A- 4 692 274
- US-A- 4 395 468
- W. J. Dollard und W.G. Parker, "An overview of the Westinghouse Electric Corporation solide oxide Fuel cell program", Extended Abstracts, Fuel Cell Technology and Applications, International Seminar, Den Haag, Niederlande, 26. - 29. Oktober 1987,
- F.J. Rohr, High-Temperature Fuel Cells, Solid Electrolytes, 1987 by Academic Press, Inc., Seite 433 ff.
- D.C. Fee et al., Monolithic Fuel Cell Development, Argonne National Laboratory, Paper presented at the 1986 Fuel Cell Seminar, Oct. 26 - 29, 1986 Tucson, AZ, U.S: Department of Energy.

## DARSTELLUNG DER ERFINDUNG

Der Erfindung liegt die Aufgabe zugrunde, ein Verfahren zur Trennung von $N_2$ und $CO_2$ sowie zur Konzentration des letzteren in energieliefernden Oxydations- und Verbrennungsprozessen anzugeben, das es ermöglicht, die $CO_2$-Emission in die atmosphärische Luft zu senken und den Treibhauseffekt zu beschränken. Das Verfahren soll einfach und ohne grossen apparativen Aufwand kostengünstig durchgeführt werden können und nach Möglichkeit weitgehend standortunabhängig sein. Es soll keine schädlichen Nebenwirkungen wie zusätzliche Luft-, Gewässer- oder Bodenverschmutzung nach sich ziehen.

Diese Aufgabe wird dadurch gelöst, dass im eingangs erwähnten Verfahren kohlenstoffhaltige Brennstoffe ($CH_4$) mit Luft ($O_2$ + $4N_2$) in einer keramischen Hochtemperatur-Brennstoffzelle mit Feststoffelektrolyt als $O^2$ = Ionenleiter zu einem Gemisch von gasförmigem $CO_2$ und $H_2O$ oxydiert werden, während der Ballaststickstoff ($4N_2$) separat abgezogen wird, und dass aus dem Strom der gasförmigen Medien $CO_2$ und $H_2O$ das $CO_2$ abgezweigt und zwecks Konzentration weiter verarbeitet wird.

## WEG ZUR AUSFÜHRUNG DER ERFINDUNG

Die Erfindung wird anhand der nachfolgenden, durch Figuren näher erläuterten Ausführungsbeispiele beschrieben:

Dabei zeigt:

Fig. 1    eine schematische Darstellung einer konventionellen Energieumwandlung mittels einer Wärmekraftmaschine (Verbrennungskraftmaschine),

Fig. 2    eine schematische Darstellung einer Energieumwandlung mittels einer Hochtemperatur-Brennstoffzelle,

Fig. 3    ein Fleissbild einer konventionellen Energieumwandlung mittels einer Hochtemperatur-Brennstoffzelle mit Nachverbrennung,

Fig. 4    ein Fliessbild einer Energieumwandlung mittels einer Hochtemperatur-Brennstoffzelle mit Trennung der gasförmigen Medien, ohne Nachverbrennung,

Fig. 5    ein Fliessbild einer Energieumwandlung mittels einer Hochtemperatur-Brennstoffzelle mit Trennung der gasförmigen Medien und Rückführung des Brennstoffs,

Fig. 6    ein Fliessbild einer Energieumwandlung mittels einer Hochtemperatur-Brennstoffzelle mit Trennung der gasförmigen Medien und Rückführung des Brennstoffs sowie Umlauf des Sauerstoffträgers.

Fig. 7    einen schematischen Längsschnitt/Aufriss durch eine vertikale Hochtemperatur-Brennstoffzelle mit zentraler Zuführung sowohl das gasförmigen Brennstoffs ($CH_4$) wie des gasförmigen Sauerstoffträgers (Luft: $O_2$; $N_2$),

Fig. 8    einen schematischen Längsschnitt/Aufriss durch eine vertikale Hochtemperatur-Brennstoffzelle mit zentraler Zuführung des gasförmigen Sauerstoffträgers (Luft: $O_2$; $N_2$),

Fig. 9    eine perspektivische Darstellung zweier benachbarter Stapel bestehend aus ebenen plattenförmigen Brennstoffzellen mit Kanälen zur Führung der gasförmigen Medien,

Fig. 10    eine perspektivische Darstellung einer Reihe von Stapeln bestehend aus ebenen plattenförmigen Brennstoffzellen mit Zuleitungen und Ableitungen für die gasförmigen Medien,

Fig. 11    eine Draufsicht/Grundriss einer Anordnung einer Vielzahl nebeneinander gestellter Stapel bestehend aus ebenen plattenförmigen Brennstoffzellen mit Kanälen zur Führung der gasförmigen Medien.

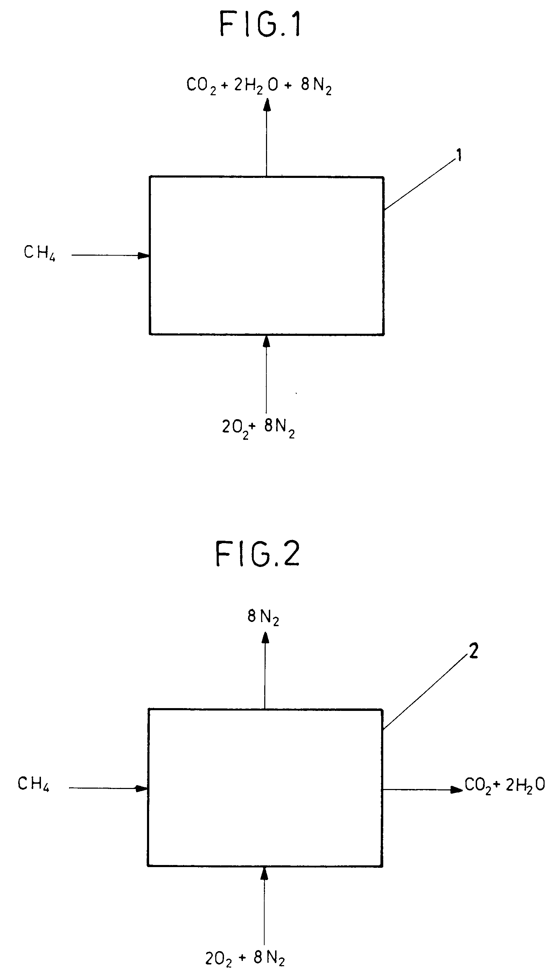

Fig. 1 ist eine schematische Darstellung einer konventionellen Energieumwandlung mittels einer Wärmekraftmaschine (Verbrennungskraftmaschine). Das Rechteck 1 stellt symbolisch eine Wärmekraftmaschine dar, deren Energieumwandlung auf einem konventionellen Oxydationsprozess beruht (Verbrennungskraftmaschine). $CH_4$ ist das Symbol für einen Kohlenwasserstoff als Brennstoff, im vorliegenden Fall Methan. Das Symbol $2O_2 + 8N_2$ stellt den für die Oxydation erforderlichen gasförmigen Sauerstoffträger dar, im vorliegenden Fall Luft. Die Reaktionsprodukte sowie das verbleibende Ballastgas sind mit dem Symbol $CO_2 + 2H_2O + 8N_2$ bezeichnet. Letzteres stellt eine homogene Gasmischung dar, die in die Atmosphäre abgeführt wird. Die Strömungsrichtung der gasförmigen Medien ist durch Pfeile angedeutet. Statt $CH_4$ wird in der Praxis auch CO oder $CO + H_2$ verwendet.

Fig. 2 bezieht sich auf eine schematische Darstellung einer Energieumwandlung mittels einer Hochtemperatur-Brennstoffzelle. Das Rechteck 2 stellt symbolisch eine Hochtemperatur-Brennstoffzelle dar, deren Energieumwandlung auf einem elektrochemischen Prozess beruht. Die Symbole für den Brennstoff ($CH_4$), den Sauerstoffträger ($2O_2 + 8N_2$), das Ballastgas ($8N_2$) und die gasförmigen Reaktionsprodukte ($CO_2 + 2H_2O$) sind grundsätzlich die gleichen wie in Fig. 1. Das Ballastgas (Stickstoff $8N_2$) wird in einem anderen Raum gesammelt als die Reaktionsprodukte (Kohlendioxyd $CO_2$ und Wasserdampf $2H_2O$), sodass eine Abtrennung des für die Atmosphäre schädlichen $CO_2$ möglich wird.

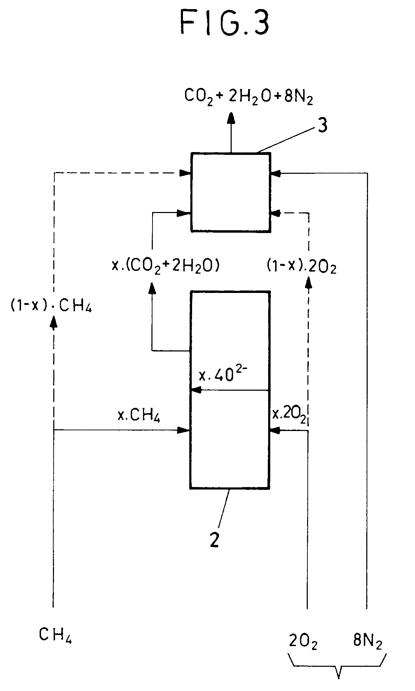

In Fig. 3 ist ein Fliessbild einer konventionellen Energieumwandlung mittels einer Hochtemperatur-Brennstoffzelle mit Nachverbrennung dargestellt. 2 ist eine Hochtemperatur-Brennstoffzelle, die auf der Brennstoffseite mit einem gasförmigen Kohlenwasserstoff ($CH_4$), auf der Sauerstoffseite mit Luft ($2O_2 + 8N_2$) gespeist wird. Die gasförmigen Medien werden in der Regel nicht vollständig verbraucht, wie das der idealen stöchiometrischen Gleichung entsprechen würde. Dementsprechend beteiligt sich ein Anteil x am Stoffumsatz, wobei $0 < x < 1$ ist. Es sind also $x \cdot 2O_2$ und $x \cdot CH_4$ an der elektrochemischen Reaktion beteiligt. Die Wanderung der Sauerstoffionen ($x \cdot 4\ O^{2-}$) durch den Feststoffelektrolyten (in der Regel dotiertes, stabilisiertes $ZrO_2$) ist durch einen Pfeil angedeutet. Auf der Brennstoffseite der Zelle entstehen $x \cdot (CO_2 + 2H_2O)$, während der unverbrauchte Brennstoff $(1-x) \cdot CH_4$ an der gleichen Stelle abgezogen wird. Auf der Sauerstoffseite verlässt ein Überschuss $(1-x) \cdot 2\ O_2$ die Zelle. Der Stickstoff ($8N_2$) nimmt nicht an den Reaktionen teil und verlässt die Zelle als Ballastgas auf der Sauerstoffseite. Sämtliche, die Zelle verlassenden gasförmigen Medien werden in der Nachverbrenneinrichtung 3 zusammengeführt, wo eine konventionelle, reine Wärme erzeugende Verbrennung stattfindet. Reaktionsprodukte und Ballastgas ($CO_2 + 2H_2O + 8N_2$) verlassen die Einrichtung 3 als Gasmischung. Dieses Verfahren bietet gegenüber demjenigen gemäss Fig. 1 praktisch keine Vorteile, da als Endprodukt die gleiche Gasmischung in die Atmosphäre abgeführt wird. Die Strömungsrichtung der gasförmigen Medien ist durch Pfeile bezeichnet.

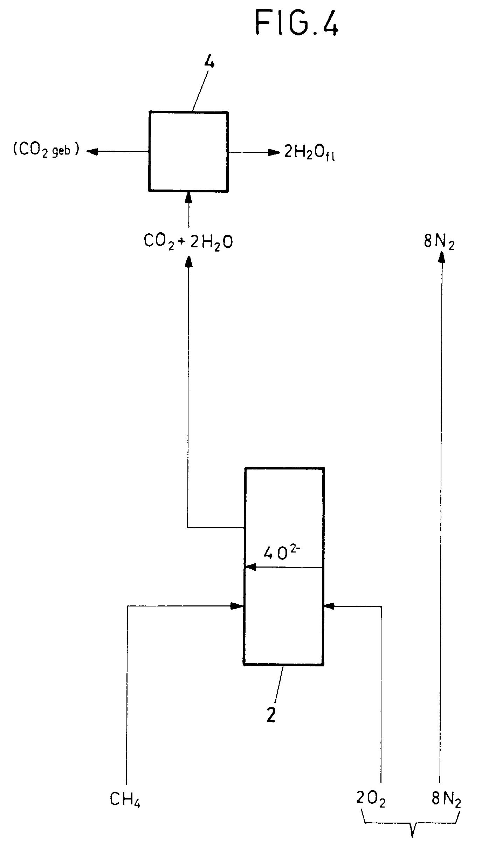

Fig. 4 zeigt ein Fliessbild einer Energieumwandlung mittels einer Hochtemperatur-Brennstoffzelle mit Trennung der gasförmigen Medien, ohne Nachverbrennung. Es ist der Fall dargestellt, wo die Reaktionen ideal, d.h. genau nach den stöchiometrischen Gesetzen ablaufen. Der Brennstoff ($CH_4$) wird mit dem Sauerstoff ($2O_2$) der Luft ($2O_2 + 8N_2$) vollständig umgesetzt. Auf der Brennstoffseite verlassen die Reaktionsprodukte ($CO_2 + 2H_2O$), auf der Sauerstoffseite lediglich das Ballastgas ($8N_2$) die Brennstoffzelle. Letzteres wird direkt in die Atmosphäre zurückgeleitet. 4 ist eine Einrichtung zur Abtrennung und Bindung

von $CO_2$. Im vorliegenden Fall verlässt beispielsweise das Wasser in flüssiger Form ($2H_2O_{fl}$) die Einrichtung 4, während das Kohlendioxyd in Gasform ($CO_2$ gas) abgezweigt wird. Letzteres kann dann in geeigneter Form weiterverarbeitet werden, ohne die Atmosphäre zu belasten.

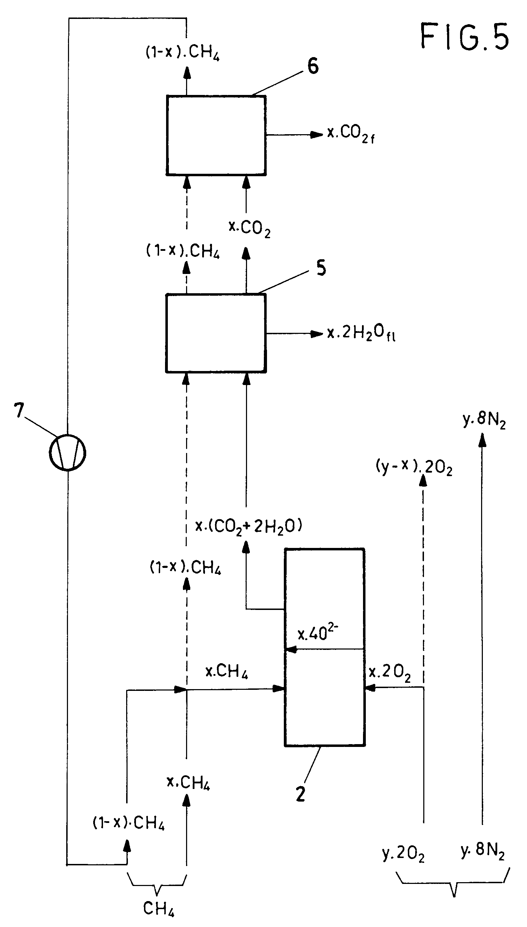

Fig. 5 stellt ein Fliessbild einer Energieumwandlung mittels einer Hochtemperatur-Brennstoffzelle mit Trennung der gasförmigen Medien und Rückführung des Brennstoffs dar. In der Hochtemperatur-Brennstoffzelle 2 werden x $\cdot$ $CH_4$ mit x $\cdot$ $2O_2$ über den Ionentransport x $\cdot$ $4O^{2-}$ umgesetzt. Die entsprechende Brennstoffmenge x $\cdot$ $CH_4$ wird der Zelle von aussen zugeführt. Zusätzlich wird der Brennstoffseite der Zelle die in einem geschlossenen Kreislauf abgespaltete Brennstoffmenge (1-x) $\cdot$ $CH_4$ zugeführt, sodass die Zelle mit der totalen Menge $CH_4$ beaufschlagt wird. Auf der Brennstoffseite verlassen die Zelle die Reaktionsprodukte x $\cdot$ ($CO_2$ + $2H_2O$) und der nicht umgesetzte Brennstoff (1-x) $\cdot$ $CH_4$. Sie werden dem Kühler/Kondensator 5 für $H_2O$-Abscheidung zugeführt. Das durch Abkühlung kondensierte Wasser (x $\cdot$ 2 $H_2O_{fl}$) verlässt den Kühler 5, während die gasförmigen Medien (1-x) $\cdot$ $CH_4$ und x $\cdot$ $CO_2$ einem zweiten Apparat, dem Kühler/Kondensator 6 für $CO_2$-Abscheidung ($CO_2$ fest) zugeführt werden. Hier werden x $\cdot$ $CO_2$ fest in Form von Kohlendioxydschnee vom Gasstrom abgetrennt. Als Rest verlässt der gasförmige Brennstoff (1-x) $\cdot$ $CH_4$ den Kühler 6 und wird über die Umwälzpumpe 7 zur Brennstoffzelle 2 zurückgeführt. Dadurch entstehen keinerlei Exergieverluste durch Nachverbrennung, Abfackeln oder Ablassen in die Atmosphäre. Auf der Saeurstoffseite wird eine Menge von x $\cdot$ $2O_2$ benötigt, die als Ionenstrom x $\cdot$ $4O^{2-}$ durch den Feststoffelektrolyten hindurchwandert. Um den Partialdruck des $O_2$ in der ganzen Zelle hoch zu halten, wird jedoch hier mit $O_2$-Überschuss gearbeitet. Der Sauerstoffseite der Zelle wird die Menge y $\cdot$ $2O_2$ zusammen mit y $\cdot$ $8N_2$ in Form von Luft zugeführt. Dabei gilt y > 1...3 oder mehr. Durch den Luftüberschuss wird für eine gute Wärmeabfuhr der Joule'schen Verluste der Brennstoffzelle gesorgt. Der überschüssige Sauerstoff (y-x) $\cdot$ $2O_2$ gelangt zusammen mit dem unbeteiligten Stickstoff y $\cdot$ $8N_2$ in die freie Atmosphäre.

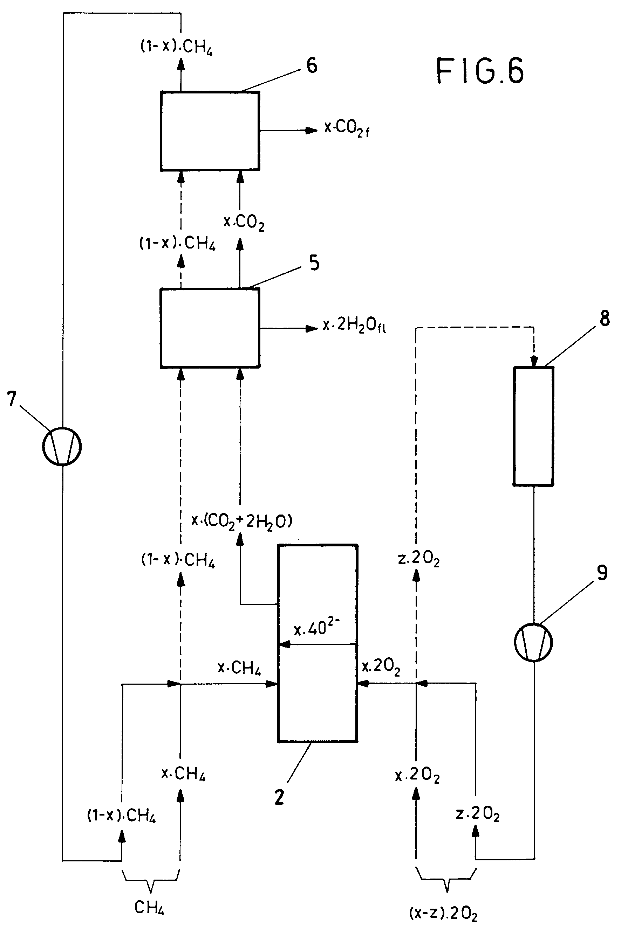

In Fig. 6 ist ein Fliessbild einer Energieumwandlung mittels einer Hochtemperatur-Brennstoffzelle mit Trennung der gasförmigen Medien und Rückführung des Brennstoffs sowie Umlauf des Sauertsoffträgers dargestellt. Ähnlich dem Verfahren gemäss Fig. 5 wird in der Hochtemperatur-Brennstoffzelle 2 ein Anteil x $\cdot$ $CH_4$ mit x $\cdot$ $2O_2$ umgesetzt. Auf der Brennstoffseite der Zelle entsprechen die Vorgänge genau denjenigen der Fig. 5 inklusive Rückführung des abgetrennten Brennstoffanteils (1-x) $\cdot$ $CH_4$ über die Umwälzpumpe 7. Auf der Sauertoffseite wird der Brennstoffzelle technisch reiner Sauerstoff zugeleitet. Von aussen wird der Anteil x $\cdot$ $2O_2$ zugeführt. Die Kammer auf der Seite der Sauerstoffelektrode wird aber hier mit einem Mehrfachen der zum Umsatz benötigten Menge Sauerstoffs beaufschlagt. Es wird zusätzlich die Menge z $\cdot$ $2O_2$ zugeleitet. Der der Elektrode entlanggeführte Überschuss-Sauerstoffstrom sorgt für konstanten Partialdruck und dient gleichzeitig zur Wärmeabfuhr, die durch Joule'sche Verluste notwendig wird. Der Sauerstoffstrom z $\cdot$ $2O_2$ wird im Kühler 8 auf eine für das Verfahren geeignete Temperatur heruntergekühlt und mittels Umwälzpumpe 9 der Brennstoffzelle 2 wieder zugeführt. Dank dieser Rückführung, die zur Temperaturregulierung herangezogen werden kann, werden elektrochemisch und thermodynamisch optimale Verhältnisse erzielt.

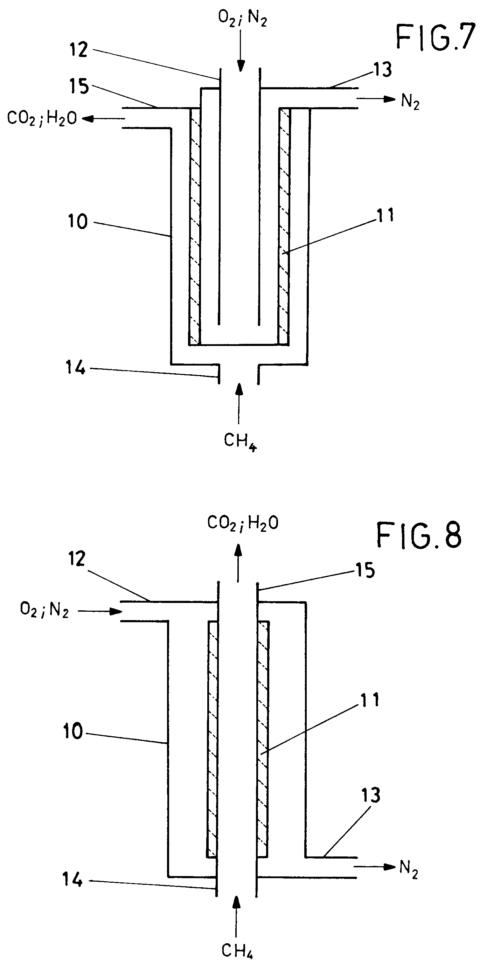

Fig. 7 stellt einen schematischen Längsschnitt/Aufriss durch eine vertikale Hochtemperatur-Brennstoffzelle mit zentraler Zuführung sowohl des gasförmigen Brennstoffs ($CH_4$) wie des gasförmigen Sauerstoffträgers (Luft: Symbol $O_2$; $N_2$) dar. Der Längsschnitt bezieht sich im vorliegenden Fall im allgemeinen auf einen rohrförmigen rotationssymmetrischen Aufbau der einzelnen Bauelemente. 10 ist ein Behälter einer Hochtemperatur-Brennstoffzelle, der im wesentlichen aus einem nach aussen hin isolierten zunderbeständigen warmfesten Metallzylinder besteht. Der Einfachheit halber ist die Wärmeisolation nicht eingezeichnet. 11 stellt den Feststoffelektrolyten in Form eines dünnwandigen Keramikzylinders aus dotiertem und stabilisiertem $ZrO_2$ dar. Die Elektrodenbeschichtung ist nicht eingezeichnet. 12 ist das konzentrische Zuführungsrohr für den Sauerstoffträger. Im vorliegenden Fall handelt es sich um Luft (Symbol $O_2$; $N_2$). Die Strömungsrichtung ist durch einen vertikalen Pfeil nach unten angedeutet. 13 stellt das seitlich angeordnete Abführungsrohr für das Ballastgas (Stickstoff; $N_2$) dar. 14 ist das Zuführungsrohr für den gasförmigen Brennstoff (Symbol $CH_4$). Die Zufuhr erfolgt zentral von unten. 15 stellt das seitlich angeordnete Abführungsrohr für die Reaktionsprodukte (Abgas: $CO_2$; $H_2O$) dar. Mit diesem Aufbau werden ideale symmetrische Verhältnisse bezüglich Wärmefluss und elektrochemische Bedingungen erzielt.

Fig. 8 bezieht sich auf einen schematischen Längsschnitt/Aufriss durch eine vertikale Hochtemperatur-Brennstoffzelle mit zentraler Zuführung des gasförmigen Brennstoffs ($CH_4$) und seitlicher Zuführung des gasförmigen Sauerstoffträgers (Luft: $O_2$; $N_2$). Die Bezugszeichen 10 bis 15 entsprechen genau denjenigen der Figur 7. Der Aufbau der einzelnen Elemente sowie die Führung der gasförmigen Medien ist jedoch von Figur 7 verschieden. Während in letzterer der Brennstoff $CH_4$ den Feststoffelektrolyten 11 von aussen

4

umspühlt, beaufschlagt er ihn hier von innen. Ausserdem herrscht hier das Gegenstromprinzip für die gasförmigen Medien, während Figur 7 nach dem Gleichstromprinzip arbeitet. Dadurch müssen auch die Gesetze der Wärmeübertragung unterschiedlich angewendet werden.

Selbstverständlich können die Längsschnitte nach Figuren 7 und 8 auch für nichtzylindrische Brennstoffzellen stehen. Dabei unterliegt die Geometrie keinerlei Einschränkungen. Es kann sich beim Feststoffelektrolyt 11 um Vierkant- oder Achtkantrohre oder um planparallele Platten handeln.

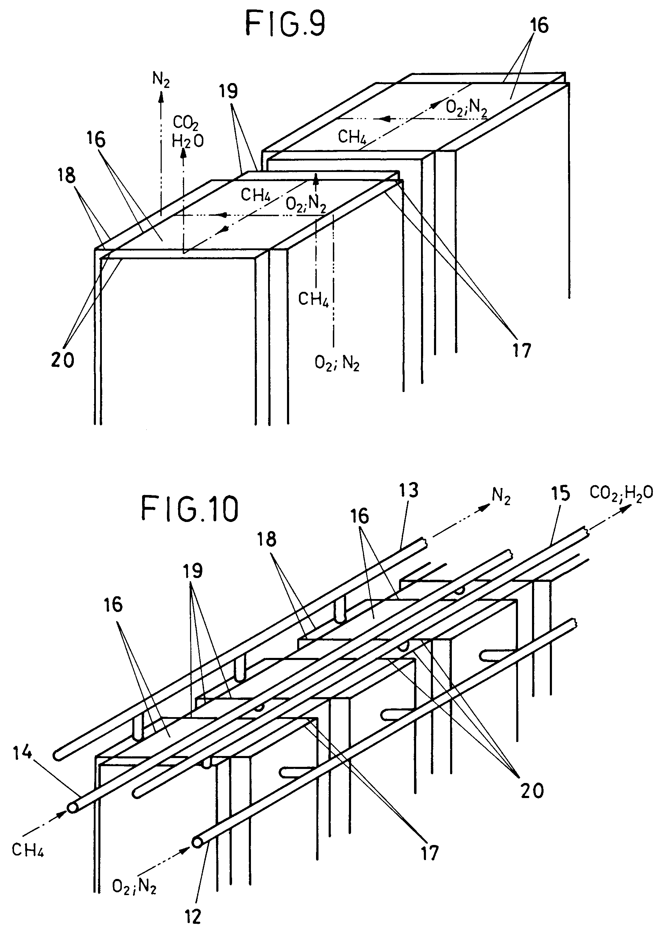

Fig. 9 ist eine perspektivische Darstellung zweier benachbarter Stapel bestehend aus ebenen plattenförmigen Brennstoffzellen mit Kanälen zur Führung der gasförmigen Medien. 16 bedeutet einen Stapel von ebenen plattenförmigen Hochtemperatur-Brennstoffzellen auf $ZrO_2$-Basis. 17 ist der auf einer Stirnseitenfront der Brennstoffzellen angeordnete Verteilkanal für den Sauerstoffträger ($O_2$; $N_2$). Gegenüber (um 180° versetzt) angeordnet befindet sich der Sammelkanal 18 für das Ballastgas ($N_2$). An einer um 90° versetzten Stirnseitenfront der Brennstoffzellen befindet sich der Verteilkanal 19 für den gasförmigen Brennstoff ($CH_4$) und diesem gegenüber der Sammelkanal 20 für die Reaktionsprodukte (Abgas: $CO_2$; $H_2O$). In der vorliegenden Anordnung fliessen alle Ströme gasförmiger Medien in den Kanälen parallel senkrecht von unten nach oben. Innerhalb der einzelnen Brennstoffzellen (in Plattenebene gesehen) herrscht hier das Kreuzstromprinzip zwischen Brennstoffstrom und Sauerstoffträgerstrom. Die mittleren Trajektorien der Gasströme sind durch mit Pfeilspitzen versehene strichpunktierte Linien unterschiedlicher Manier dargestellt. Die Sauerstoffströme aller Zellen laufen parallel und sind gleich gerichtet, während die Brennstoffströme benachbarter Stapel jeweils entgegengesetzten Richtungssinn aufweisen.

Fig. 10 ist eine perspektivische Darstellung einer Reihe von Stapeln bestehend aus ebenen plattenförmigen Brennstoffzellen mit Zuleitungen und Ableitungen für die gasförmigen Medien. Die Anordnung stellt eine Erweiterung der Figur 9 dar, wobei die verschiedenen Stapel 16 noch kompakter aneinandergereiht sind. 12 ist das längs von mehreren Stapeln 16 seitlich angeordnete Zuführungsrohr für den Sauerstoffträger (Luft: $O_2$; $N_2$), welches im vorliegenden Fall pro Stapel 16 je einen Rohrstummel für die Versorgung des jeweiligen vertikalen Verteilkanals 17 aufweist. 13 ist das - im vorliegenden Fall - auf der Stirnseite der Stapel 16 etwas seitlich angeordnete Abführungsrohr, welches das aus den Sammelkanälen 18 stammende Ballastgas ($N_2$) aufnimmt. 14 bedeutet das Zuführungsrohr für den gasförmigen Brennstoff ($CH_4$), welcher pro Stapelpaar mit je einem Rohrstummel zur Speisung des für benachbarte Stapel 16 gemeinsamen Verteilkanals 19 ausgerüstet ist. Neben dem Zuführungsrohr 17 liegt das Abführungsrohr 15 für die Reaktionsprodukte ($CO_2$; $H_2O$), welches analog über entsprechend versetzte Rohrstummel mit den für je zwei benachbarte Stapel 16 gemeinsamen vertikalen Sammelkanälen 20 verbunden ist. Auf diese Weise ist die Trennung der Reaktionsprodukte ($CO_2$; $H_2O$) vom Ballastgas ($N_2$) auch bei einer kompakten Bauweise einer grossen Anzahl von Stapeln 16 von ebenen plattenförmigen Brennstoffzellen gewährleistet. Innerhalb einer jeden Brennstoffzelle herrscht das Kreuzstromprinzip gemäss Figur 9 (In Figur 10 der Übersichtlichkeit halber nicht eingezeichnet!).

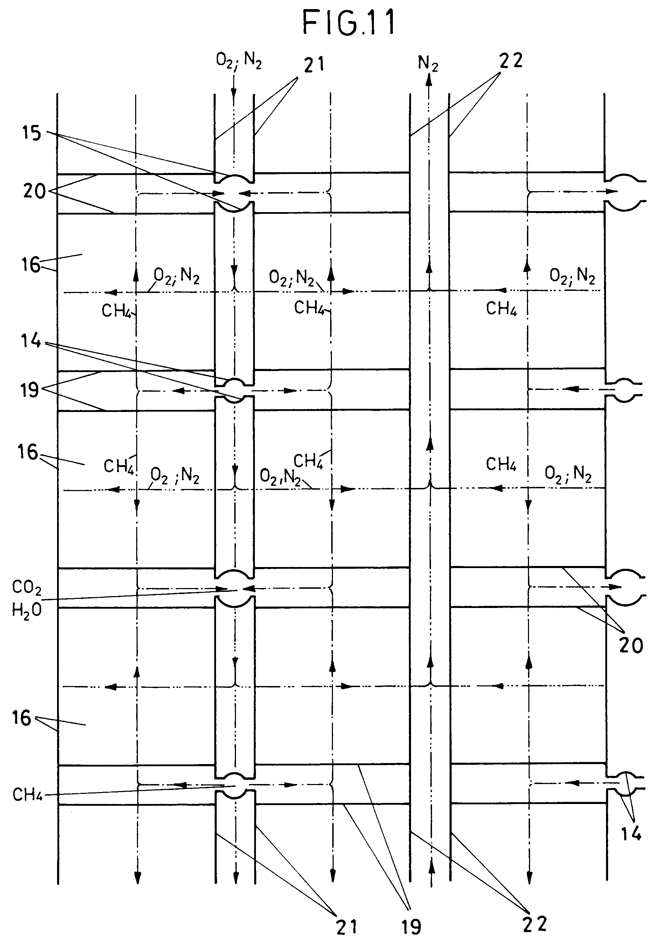

Fig. 11 stellt eine Draufsicht/Grundriss einer Anordnung einer Vielzahl nebeneinander gestellter Stapel bestehend aus ebenen plattenförmigen Brennstoffzellen mit Kanälen zur Führung der gasförmigen Medien dar. 16 ist jeweils ein Stapel von ebenen, plattenförmigen quadratischen Brennstoffzellen (Grundriss). Die Anordnung ist in beiden Achsen der Grundrissebene symmetrisch. 14 stellt je ein vertikales Zuführungsrohr für den gasförmigen Brennstoff ($CH_4$) dar. Das Zuführungsrohr 14 ist über eine Anzahl kurzer symmetrischer Rohrstummel mit je zwei sich gegenüberliegenden vertikalen Verteilkanälen 19 für den Brennstoff verbunden. 15 ist je ein vertikales Abführungsrohr für die Reaktionsprodukte ($CO_2$; $H_2O$). Das Abführungsrohr 15 ist über eine Anzahl kurzer symmetrischer Rohrstummel mit je zwei sich gegenüberliegenden vertikalen Sammelkanälen 20 für die Reaktionsprodukte verbunden. Eine grössere Anzahl von vertikalen Rohren 14 und 15 stehen in je einem sich in einer vertikalen Ebene befindlichen Zuführungs- und Verteilkanal 21 für den Sauerstoffträger (Luft: $O_2$; $N_2$). Die gasdichten Rohre 14 und 15 werden daher vom Strom des Sauerstoffträgers umspühlt, ohne dass dieser in seiner Bewegung sichtlich beeinträchtigt wird. 22 stellt einen sich in einer vertikalen Ebene befindlichen Sammel- und Abführungskanal für das Ballastgas (Stickstoff: $N_2$) dar. Der Kanal 22 wird durch keinerlei Rohre, Kanäle oder andere Bauelemente - ausser ev. notwendigen Stützelementen zwischen den einzlenen Stapeln 16 zur Verbesserung von deren mechanischer Stabilität (nicht gezeichnet) - unterbrochen. Die Kanäle 21 und 22 wechseln sich - in der Richtung senkrecht auf ihre Vertikalebenen - gegenseitig ab.

Ausführungsbeispiel 1:

Siehe Figuren 4, 10 und 11 !

Ein auf Hochtemperatur-Brennstoffzellen aufgebautes elektrochemisches Kraftwerk weist folgende Daten und Betriebsparameter auf:

| | |
|---|---|
| Elektrische Leistung: | 100 MW |
| Betriebszeit: | 5000 h/Jahr |
| Energiemenge: | 500 GWh/Jahr |
| Brennstoff: | $CH_4$ |
| Unterer Heizwert: | 35700 $kJ/m^3$ = 9,9 $kWh/m^3$ (8550 $kcal/m^3$) |
| Elektrochemischer Wirkungsgrad: | 0,60 |

Reaktionsgleichung:

$$CH_4 + 2O_2 \rightarrow CO_2 + 2H_2O$$

Normalbedingungen: 1 mol $CO_2$: 44g; 22,4 l
Normalbedingungen: $CH_4$ Volumen/Jahr:

$$\frac{500 \cdot 10^6}{9,9 \cdot 0,6} = \underline{84 \cdot 10^6 \ m^3/Jahr}$$

$$O_2\text{-Volumen/Jahr:}$$

$$\underline{168 \cdot 10^6 \ m^3/Jahr}$$

$$\text{Luftvolumen } (2O_2 + 8N_2)/Jahr:$$

$$5 \cdot 168 \cdot 10^6 = \underline{840 \cdot 10^6 \ m^3/Jahr}$$

$$CO_2\text{-Ausstoss/Jahr:}$$

$$\underline{84 \cdot 10^6 \ m^3/Jahr}, \text{ entsprechend } \underline{165 \cdot 10^6 \ kg \ CO_2/Jahr}$$

Gemäss Schema Fig. 4 fällt diese $CO_2$-Menge in konzentrierter Form an und kann gebunden oder mindestens teilweise technisch weiter verarbeitet werden, ohne die Atmosphäre in direkter Weise zu belasten. Dazu bieten sich an: Verflüssigung, Trockeneis, Grossraumdeponie (Erdrinde, Tiefsee), chemische Umsetzung mit Metalloxyd oder Hydroxyd und anderes mehr.

Brennstoffzelle: Feststoffelektrolyt: Dotiertes, stabilisiertes $ZrO_2$
Betriebstemperatur: 900 °C
Einzelzelle: Plattenförmig, quadratisch, 200 mm Seitenlänge. Fläche = 400 $cm^2$
Stromdichte: 0,42 $A/cm^2$
Zellenspannung: 0,6 V
Zellenstrom: 167 A
Spezifische Leistung: 0,25 $W/cm^2$
Zellenleistung: 100 W
Anordnung:
Fest zusammengebaute Stapel zu 20 Einzelzellen.
Teilspannung pro Stapel: 12 V
5 Stapel elastisch zu Gruppen übereinander angeordnet; Serieschaltung
Gruppenspannung: 60 V. Gruppenleistung: 10 KW
100 Gruppen vertikal nebeneinander in quadratischem Grundriss mit 400 mm Mittenabstand zu einem Leistungsblock angeordnet: Parallelschaltung.

Spannung pro Leistungsblock: 60 V. Strom pro Block:16700 A.

Leistung pro Block: 1000 KW

10 Leistungsblöcke elastisch vertikal übereinander zu einer Kraftwerkseinheit zusammengebaut: Serieschaltung.

Spannung pro Kraftwerkseinheit: 600 V. Strom pro Kraftwerkseinheit 16 700 A. Leistung pro Kraftwerkseinheit: 10000 KW. 10 Kraftwerkseinheiten nebeneinander in je 2 gegenüberliegenden Reihen aufgestellt und mit individuellen Wechselrichtern und Transformatoren zusammengeschaltet: Nennleistung bei Vollast: $10 \cdot 10MW = 100MW$.

Bauvolumen: Brennstoffzellen total (aktiver Teil): Brutto: ca. 50 $m^3$

Stromumformer:

Gleichstromzerhacker/Dreisphasenstromumrichter nach Unterschwingungsverfahren. Thyristor/Dioden-Schaltungen.

Vergleich mit konventionellem thermischem Kraftwerk (Dampfkraftwerk):

Elektrische Leistung: 100 MW

Betriebszeit: 5000 h/Jahr

Energiemenge: 500 GWh/Jahr

Brennstoff: Aufbereitete, getrocknete Braunkohle mittlerer Qualität

Unterer Heizwert: 23 400 kJ/kg = 6,5 kWh/kg (5600 kcal/kg)

Maschinenart: Dampfturbine

Thermischer Wirkungsgrad: 0,35

Reaktionsgleichung (vereinfacht):

$C + O_2 \rightarrow CO_2$

Normalbedingungen: 1 mol $CO_2$: 44g; 22,4 l

Normalbedingungen: C-Masse/Jahr

$$\frac{500 \cdot 10^6}{6,5 \cdot 0,35} = \underline{220 \cdot 10^6 \text{ kg/Jahr}}$$

$O_2$-Volumen/Jahr (theoretisch):

$$\frac{220 \cdot 10^6 \cdot 22,4}{12} = \underline{410 \cdot 10^6 \text{ m}^3/\text{Jahr}}$$

Luftvolumen ($O_2 + 4N_2$)/Jahr (ohne Luftüberschuss)

$5 \cdot 410 \cdot 10^6 = 2050 \cdot 10^6$ $m^3$/Jahr

Luftvolumen/Jahr (mit Luftüberschuss: $\lambda = 1,6$):

$1,6 \cdot 2050 \cdot 10^6 = 3280 \cdot 10^6$ $m^3$/Jahr

$CO_2$-Ausstoss/Jahr:

$$\underline{410 \cdot 10^6 \text{ m}^3/\text{Jahr}}, \text{ entsprechend } \underline{\underline{810 \cdot 10^6 \text{ kgCO}_2/\text{Jahr}}}$$

Rauchgasvolumen/Jahr (ohne Luftüberschuss):

$2050 \cdot 10^6$ $m^3$/Jahr

Rauchgasvolumen/Jahr (mit Luftüberschuss: $\lambda = 1,6$)

$3280 \cdot 10^6$ $m^3$/Jahr

Reaktionsgleichung:

$$C + 1{,}6\ O_2 + 4 \cdot 1{,}6\ N_2 \rightarrow CO_2 + 0{,}6\ O_2 + 6{,}4\ N_2$$

$CO_2$-Gehalt der Rauchgase (mit Luftüberschuss: $\lambda = 1{,}6$)

$$\frac{410}{3280} \cdot 100 = \underline{12{,}5\ Vol.\text{-}\%}$$

Bei der konventionellen Verbrennung in üblichen Braunkohle-Kesselfeuerungen fällt also das $CO_2$ in stark verdünnter Form an, was seine rationelle Abtrennung und Weiterverarbeitung wesentlich erschwert und in den meisten Fällen unwirtschaftlich macht. Jedenfalls macht dies die Konzentrierung des $CO_2$ in Sonderanlagen notwendig.

Ausführungsbeispiel 2:

Siehe Figuren 5, 10 und 11 !

Das elektrochemische Kraftwerk beruht auf Hochtemperatur-Brennstoffzellen und weist die nachfolgenden Betriebsdaten auf:

Elektrische Leistung: 100 MW
Betriebszeit: 6000 h/Jahr
Energiemenge: 600 GWh/Jahr
Brennstoff: Erdgas: 94 Vol-% $CH_4$; 3 Vol-% $CO_2$; 3 Vol-% $N_2$
Unterer Heizwert: 33600 kJ/m$^3$ = 9,3 kWh/m$^3$ (8040 kcal/m$^3$)
Elektrochemischer Wirkungsgrad: 0,65
Reaktionsgleichung:

$$0{,}94 CH_4 + 0{,}03 CO_2 + 0{,}03 N_2 + 2 \cdot 0{,}94 O_2 \rightarrow 0{,}97 CO_2 + 1{,}88 H_2O + 0{,}03 N_2$$

Normalbedingungen: 1 mol $CO_2$: 44g; 22,4 l
Normalbedingungen: Erdgasvolumen/Jahr:

$$\frac{600 \cdot 10^6}{9{,}3 \cdot 0{,}65} = \underline{99 \cdot 10^6\ m^3/Jahr}$$

$O_2$-Volumen/Jahr (theoretisch):
$2 \cdot 0{,}94 \cdot 99 \cdot 10^6 = \underline{186 \cdot 10^6\ m^3/Jahr}$
Luftvolumen ($2 \cdot 0{,}94\ O_2 + 8 \cdot 0{,}94\ N_2$)/Jahr (ohne Luftüberschuss):
$5 \cdot 186 \cdot 10^6 = \underline{930 \cdot 10^6\ m^3/Jahr}$
Luftvolumen/Jahr (mit Luftüberschuss : y = 5)
$5 \cdot 930 \cdot 10^6 = \underline{4650.10^6\ m^3/Jahr}$
$CO_2$-Ausstoss/Jahr:

$$0{,}97 \cdot 99 \cdot 10^6 = \underline{96 \cdot 10^6\ m^3/Jahr}, entsprechend \underline{\underline{188 \cdot 10^6\ kg\ CO_2/Jahr}}$$

Diese $CO_2$-Menge fällt gemäss Schema Fig. 5 in konzentrierter Form an und kann zu industriellen oder Haushaltungszwecken leicht weiterverarbeitet und in rationeller Weise der Volkswirtschaft zur Verfügung gestellt werden.

Die Daten für die Brennstoffzellen und deren Anordnungen entsprechen weitgehend den unter Beispiel 1 gemachten Angaben. Der höhere Wirkungsgrad wird durch konstruktive Massnahmen und eine bessere Ausnutzung der Konvertierungsreaktionen innerhalb der Brennstoffzellen erreicht.

Vergleich mit konventionellem thermischem Kraftwerk (Gasturbinenkraftwerk):

Elektrische Leistung: 100 MW
Betriebszeit: 6000 h/Jahr
Energiemenge: 600 GWh/Jahr
Brennstoff: Schweres Gasöl: Hypothetische Formel Eikosan $C_{20}H_{42}$
Unterer Heizwert: 42900 kJ/kg = 11,9 kWh/kg (10250 kcal/kg)
Maschinenart: Gasturbine
Thermischer Wirkungsgrad: 0,30
Reaktionsgleichung (vereinfacht, hypothetisch):

$$C_{20}H_{42} + \frac{61}{2} O_2 \rightarrow 20\ CO_2 + 21\ H_2O$$

Normalbedingungen: 1 mol $CO_2$: 44g; 22,4 l
Normalbedingungen: $C_{20}H_{42}$-Masse/Jahr

$$\frac{600 \cdot 10^6}{11,9 \cdot 0,30} = \underline{168 \cdot 10^6 \ \text{kg/Jahr}}$$

$O_2$-Volumen/Jahr (theoretisch):

$$\frac{168 \cdot 10^6 \cdot 20 \cdot 22,4}{282} = \underline{266 \cdot 10^6 \ \text{m}^3/\text{Jahr}}$$

Luftvolumen ($O_2 + 4N_2$)/Jahr (ohne Luftüberschuss)
$5 \cdot 266 \cdot 10^6 = 1330 \cdot 10^6$ m³/Jahr
Luftvolumen/Jahr (mit Luftüberschuss: $\lambda = 3,0$):
$3 \cdot 1330 \cdot 10^6 = 3990 \cdot 10^6$ m³/Jahr
$CO_2$-Ausstoss/Jahr:

$$\frac{266 \cdot 2 \cdot 20 \cdot 10^6}{61} = 174 \cdot 10^6 \ \text{m}^3/\text{Jahr},$$

entsprechend $342 \cdot 10^6$ kg$CO_2$/Jahr
Abgasvolumen/Jahr (ohne Luftüberschuss):

$$\left(4 \cdot 266 + 174 + \frac{174 \cdot 21}{20}\right) \cdot 10^6 = 1421 \cdot 10^6 \ \text{m}^3/\text{Jahr}$$

Abgasvolumen/Jahr (mit Luftüberschuss: = 3,0):
$(1421 + 2 \cdot 1330) \cdot 10^6 = 4081 \cdot 10^6$ m³/Jahr
Reaktionsgleichung:

$$C_{20}H_{42} + \frac{3 \cdot 61}{2} O_2 + \frac{4 \cdot 3 \cdot 61}{2} N_2 \rightarrow 20CO_2 + 21H_2O + 61\ O_2 + 366\ N_2$$

$CO_2$-Gehalt der Rauchgase (mit Luftüberschuss: $\lambda = 3,0$)

$$\frac{174}{4081} \cdot 100 = 4,3 \text{ Vol.-\%}$$

Die Konzentration des $CO_2$ im Abgas ist noch weit geringer als im Falle des Braunkohlekraftwerks gemäss Vergleich unter Beispiel 1. Damit wird die Abtrennung und ev. Nutzung dieses Gases technisch-wirtschaftlich sehr erschwert.

Vergleich mit konventionellem zweistufigem thermischen Kraftwerk (Gas-/Dampfturbine):

Elektrische Leistung total: 40 MW + 60 MW = 100 NW
Betriebszeit: 6000 h/Jahr
Energiemenge: 600 GWh/Jahr
Brennstoff: Schweres Gasöl (hypothetisch $C_{20}H_{42}$)
Unterer Heizwert: 42900 kJ/m³ = 11,9 kWh/kg (10250 kcal/kg)
Thermischer Wirkungsgrad: 0,50
Reaktionsgleichung (hypothetisch):

$C_{20}H_{42} + \frac{61}{2} O_2 \rightarrow 20\ CO_2 + 21\ H_2O$

Normalbedingungen: 1 mol $CO_2$: 44g; 22,4 l
Normalbedingungen: $C_{20}H_{42}$-Masse /Jahr:

$$\frac{600 \cdot 10^6}{11,9 \cdot 0,50} = \underline{101 \cdot 10^6 \text{ kg/Jahr}}$$

$O_2$-Volumen/Jahr (theoretisch):

$$\frac{101 \cdot 10^6 \cdot 20 \cdot 22,4}{282} = \underline{160 \cdot 10^6 \text{ m}^3/\text{Jahr}}$$

Luftvolumen ($O_2 + 4N_2$)/Jahr (ohne Luftüberschuss):
5·160·10⁶ = 800·10⁶ m³/Jahr
Luftvolumen/Jahr (mit Luftüberschuss: $\lambda = 3,0$):
3·800·10⁶ = 2400·10⁶ m³/Jahr
$CO_2$-Ausstoss/Jahr:

$$\frac{160 \cdot 2 \cdot 20}{61} \cdot 10^6 = \underline{105 \cdot 10^6 \text{ m}^3/\text{Jahr}}, \text{entsprechend } \underline{\underline{206 \cdot 10^6 \text{kgCO}_2/\text{Jahr}}}$$

Abgasvolumen/Jahr (ohne Luftüberschuss):

$$\left(4 \cdot 160 + 105 + \frac{105 \cdot 21}{20}\right) \cdot 10^6 = \underline{855 \cdot 10^6 \text{ m}^3/\text{Jahr}}$$

10

Abgasvolumen/Jahr (mit Luftüberschuss: $\lambda$ = 3,0):
$(855 + 2 \cdot 800) \cdot 10^6$ = $\underline{2455 \cdot 10^6}$ m³/Jahr
Reaktionsgleichung:

$$C_{20}H_{42} + 3 \cdot \tfrac{61}{2} O_2 + 4 \cdot 3 \cdot \tfrac{61}{2} N_2 \rightarrow 20\ CO_2 + 21\ H_2O + 61\ O_2 + 366\ N_2$$

$CO_2$-Gehalt des Abgases (mit Luftüberschuss: $\lambda$ = 3,0):

$$\frac{105}{2455} \cdot 100 = \underline{4,3\ \text{Vol.-\%}}$$

Über die Konzentration des $CO_2$ etc. gilt das oben Gesagte.

Die Erfindung ist nicht auf die Ausführungsbeispiele beschränkt.

Das Verfahren zur Trennung von $N_2$ und $CO_2$ und Konzentration des letzteren in energieliefernden Oxydations- und Verbrennungsprozessen, wird durchgeführt, indem kohlenstoffhaltige Brennstoffe ($CH_4$) mit Luft ($O_2$ + $4N_2$) in einer keramischen Hochtemperatur-Brennstoffzelle mit Feststoffelektrolyt als $O^2=$Ionenleiter zu einem Gemisch von gasförmigem $CO_2$ und $H_2O$ oxydiert werden, während der Ballast-stickstoff ($4N_2$) separat abgezogen wird, und aus dem Strom der gasförmigen Medien $CO_2$ und $H_2O$ das $CO_2$ abgezweigt und zwecks Konzentration weiterverarbeitet wird.

Vorzugsweise wird der Strom der gasförmigen Medien $CO_2$ und $H_2O$ in einen Wäscher geleitet und das $CO_2$ ausgewaschen und mit einem Alkali- oder Erdalkalioxyd zu einem Karbonat abgebunden und ausgefällt. In einer anderen Variante des Verfahrens wird der Strom der gasförmigen Medien $CO_2$ und $H_2O$ bis unter den Taupunkt des $H_2O$ abgekühlt und letzteres kondensiert und aus dem Strom abgezweigt und das auf diese Weise im Restgasstrom konzentrierte $CO_2$ weiter verarbeitet. Letzteres wird in vorteilhafter Weise komprimiert und in Flaschen abgefüllt.

Gemäss einer weiteren Variante des Verfahrens wird das $CO_2$ weiter abgekühlt, kondensiert und in Flaschen abgefüllt. Besonders vorteilhaft wird das $CO_2$ weiter abgekühlt, verfestigt und kompaktiert und in fester Form als Trockeneis in Verkehr gebracht. Das Symbol $CH_4$ steht allgemein für einen kohlenstoffhaltigen Brennstoff, hat daher auch bei Verwendung eines anderen Kohlenwasserstoffs oder einer Mischung von $CO$ und $H_2$ (Wassergas) oder $CO$ allein (Kohlegas) seine unumschränkte Gültigkeit.

**Patentansprüche**

1. Verfahren zur Trennung von $N_2$ und $CO_2$ und Konzentration des letzteren in energieliefernden Oxydations- und Verbrennungsprozessen, dadurch gekennzeichnet, dass kohlenstoffhaltige Brennstoffe ($CH_4$) mit Luft ($O_2 + 4N_2$) in einer keramischen Hochtemperatur-Brennstoffzelle mit Feststoffelektrolyt als $O^2$-Ionenleiter zu einem Gemisch von gasförmigem $CO_2$ und $H_2O$ oxydiert wird, während der Ballaststickstoff ($4N_2$) separat abgezogen wird, und dass aus dem Strom der gasförmigen Medien $CO_2$ und $H_2O$ das $CO_2$ abgezweigt und zwecks Konzentration weiter verarbeitet wird.

2. Verfahren nach Anspruch 1, dadurch gekennzeichnet, dass der Strom der gasförmigen Medien $CO_2$ und $H_2O$ in einen Wäscher geleitet und das $CO_2$ ausgewaschen und mit einem Alkali- oder Erdalkalioxyd zu einem Karbonat abgebunden und ausgefällt wird.

3. Verfahren nach Anspruch 1, dadurch gekennzeichnet, dass der Strom der gasförmigen Medien $CO_2$ und $H_2O$ bis unter den Taupunkt des $H_2O$ abgekühlt und letzteres kondensiert und aus dem Strom abgezweigt wird, und dass das auf diese Weise im Restgasstrom konzentrierte $CO_2$ weiter verarbeitet wird.

4. Verfahren nach Anspruch 3, dadurch gekennzeichnet, dass das $CO_2$ komprimiert und in Flaschen abgefüllt wird.

5. Verfahren nach Anspruch 3, dadurch gekennzeichnet, dass das $CO_2$ weiter abgekühlt, kondensiert und in Flaschen abgefüllt wird.

6. Verfahren nach Anspruch 3, dadurch gekennzeichnet, dass das $CO_2$ weiter abgekühlt, verfestigt und kompaktiert wird und in fester Form als Trockeneis in Verkehr gebracht wird.

# FIG.1

$$CO_2 + 2H_2O + 8N_2$$

$$CH_4 \rightarrow$$

1

$$2O_2 + 8N_2$$

# FIG.2

$$8N_2$$

2

$$CH_4 \rightarrow$$

$$CO_2 + 2H_2O$$

$$2O_2 + 8N_2$$

# FIG.3

$CO_2 + 2H_2O + 8N_2$

3

$x.(CO_2 + 2H_2O)$

$(1-x).2O_2$

$(1-x) \cdot CH_4$

$x.4O^{2-}$

$x.CH_4$

$x.2O_2$

2

$CH_4$

$2O_2$

$8N_2$

# FIG.4

FIG.5

$(1-x).CH_4$

6

$x.CO_{2f}$

$x.CO_2$

$(1-x).CH_4$

5

$x.2H_2O_{fl}$

7

$y.8N_2$

$(y-x).2O_2$

$x.(CO_2+2H_2O)$

$(1-x).CH_4$

$x.40^{2-}$

$x.CH_4$

$x.2O_2$

$(1-x).CH_4$

$x.CH_4$

2

$y.2O_2$    $y.8N_2$

$CH_4$

# FIG.6

FIG.7

FIG.8

FIG.9

FIG.10

## FIG.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 751 151  (H.C. HEALY et al.) <br> * Figur 1; Spalte 1, Zeilen 6-10,18-19,42-67; Spalte 2, Zeilen 10-35; Spalte 3, Zeilen 18-51; Patentanspruch 1 * <br> --- | 1 | H 01 M    8/12 <br> H 01 M    8/06 <br> C 01 B   31/20 <br> C 01 B   21/02 |
| Y | WO-A-8 302 605  (W.R. GRACE & CO.) <br> * Patentanspruch 1; Seite 2, Zeilen 31-33; Seite 3, Zeilen 1-18 * <br> --- | 1 | |
| Y | SOLID STATE IONICS, Band 28-30, 1988, Seiten 1547-1552, Elsevier Science Publishers B.V. (North-Holland Physics Publishing Division), Amsterdam, NL; B.C.H. STEELE et al.: "Oxidation of methane in solid state electrochemical reactors" <br> * Zusammenfassung; Seite 1547; Seite 1552, linke Spalte; Figur 1; Seite 1547, linke Spalte * <br> --- | 1 | |
| A | PATENT ABSTRACTS OF JAPAN, Band 12, Nr. 430 (E-682)[3277], 14. November 1988; & JP-A-63 166 157 (MITSUBISHI HEAVY IND.) 09-07-1988 <br> * Zusammenfassung * <br> --- | 1 | **RECHERCHIERTE SACHGEBIETE (Int. Cl.5)** <br><br> H 01 M <br> C 01 B |
| A | FR-A-2 374 752  (IMPERIAL CHEMICAL INDUSTRIES) <br> * Patentansprüche 1,6,10; Seite 6, Zeilen 27-29; Seite 7, Zeilen 9-18 * <br> --- | 1 | |
| A | DE-A-2 105 643  (VEB PETROCHEMISCHES KOMBINAT SCHWEDT) <br> * Seite 1, Absatz 1; Seite 2, Absatz 4; Figur 3 * <br> ---                          -/- | 1 | |

Der vorliegende Recherchenbericht wurde für alle Patentansprüche erstellt

| Recherchenort | Abschlußdatum der Recherche | Prüfer |
|---|---|---|
| DEN HAAG | 01-07-1991 | D'HONDT J.W. |